(19) Europäisches Patentamt
European Patent Office
Office européen des brevets

(11) **EP 1 491 985 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
***G06F 1/08*** *(2006.01)*

(21) Anmeldenummer: **04010693.2**

(22) Anmeldetag: **05.05.2004**

(54) **Verfahren zur Zeitbildung in einer Datenverarbeitungseinheit**

Method for time generation in a data processing unit

Méthode de génération de temps dans une unité de traitement de données

(84) Benannte Vertragsstaaten:
**DE FR GB IT**

(30) Priorität: **27.06.2003 DE 10329116**

(43) Veröffentlichungstag der Anmeldung:
**29.12.2004 Patentblatt 2004/53**

(73) Patentinhaber: **SIEMENS AKTIENGESELLSCHAFT**
**80333 München (DE)**

(72) Erfinder:
• **Haller, Georg**
**91058 Erlangen (DE)**
• **Krüger, Richard**
**85053 Ingolstadt (DE)**
• **Schiller, Frank Dr.**
**90408 Nürnberg (DE)**
• **Schütz, Hartmut**
**91336 Heroldsbach (DE)**

(56) Entgegenhaltungen:
EP-A- 0 412 328      EP-A- 0 657 796
DE-A1- 10 053 341    GB-A- 2 286 300
US-A- 4 598 257

**Beschreibung**

Verfahren zur Zeitbildung in einer Datenverarbeitungseinheit

Die Erfindung betrifft ein Verfahren zur Zeitbildung in einer Datenverarbeitungseinheit, insbesondere einer speicherprogrammierbaren Steuerung. Des Weiteren betrifft die Erfindung eine Vorrichtung zur Zeitbildung in einer Datenverarbeitungseinheit, z. B. einer speicherprogrammierbaren Steuerung (auch Automatisierungsgerät genannt), welche üblicherweise der Automatisierung einer technischen Anlage, z. B. einer Maschine, einer Fertigungs- oder Kraftwerksanlage dient.

Datenverarbeitungsanlagen oder -einheiten finden vielseitige Anwendung im Rahmen von industriellen Automatisierungsprozessen. Dabei nimmt in einer Datenverarbeitungseinheit die Zentraleinheit (auch Prozessor oder Central Processor Unit, kurz CPU genannt) eine zentrale Rolle ein. Die Zentraleinheit dient der Verarbeitung eines Datenverarbeitungsprogramms oder einer Programmsequenz. Insbesondere zur Steuerung von sicherheitskritischen Prozessen beispielsweise in Chemieanlagen, Kraftwerksanlagen, sind im allgemeinen Datenverarbeitungseinheiten mit hohen Sicherheitsanforderungen vorgesehen, an welche insbesondere hohe Anforderungen an eine korrekt ablaufende Zeit gestellt werden. Mit anderen Worten: Derartige, auch häufig als fehlersichere Steuerungen bezeichnete Datenverarbeitungseinheiten führen dabei automatisierte Sicherheitsfunktionen aus, welche durch fehlerbedingte Zeitdehnung oder - verzögerung bzw. Zeitschrumpfung den zugrunde liegenden Automatisierungsprozess beispielsweise bedingt durch verspätete Auslösung eines Signals gefährden können.

Üblicherweise ist daher zur Vermeidung einer unkorrekt ablaufenden Zeit in der Datenverarbeitungseinheit eine Zeitbildung von mindestens zwei Zeiten vorgesehen. Dazu umfasst die Datenverarbeitungseinheit im allgemeinen einen integrierten Baustein mit einem integrierten Mikroprozessor zur Bildung von redundanten Zeiten. Nachteilig dabei ist, dass gegebenenfalls Common-Cause-Fehler auftreten, die wegen paralleler Auswirkungen auf beide Zeiten nicht aufgedeckt werden.

Bei kleinen Werten von Arbeitszyklen einer Programmsequenz wird die Zeitbildung daher entsprechend häufig z. B. im 1-ms-Takt aktualisiert. Dies kann aber wiederum zu einer relativ großen Ungenauigkeit der Überwachung der Zeit bei kurzen Aktualisierungsintervallen führen. Beispielsweise beträgt bei einem Aktualisierungsintervall von 3 ms mit einem Prozesstoleranzbereich von 2 ms die relative Ungenauigkeit 66,66 %, wohingegen bei einem Aktualisierungsintervall von 1024 ms mit einem Prozesstoleranzbereich ebenfalls von 2 ms die relative Ungenauigkeit nur noch 0,29 % beträgt. Somit kann ein Zeitfehler erst bei relativ großen Abweichungen beider Zeiten voneinander sicher identifiziert werden.

Zur Vermeidung von Common-Cause-Fehlern ist daher im allgemeinen zur Zeitbildung die zugrunde liegende Hardware und Software des jeweiligen Zeitbildungsprozesses unabhängig voneinander ausgebildet. Beispielsweise steht hierzu eine erste separate integrierte Schaltung zur eigentlichen Zeitbildung und eine zweite zur Zeitüberwachung zur Verfügung. Eine derartige Ausführungsform ist aber besonders kostenintensiv. Auch eine Ausführung auf ein- und derselben Baugruppe anhand von zwei separaten integrierten Bauteilen ist neben der hardwareseitigen Komplexität und dem daraus resultierenden hohen Kosten durch die Verteilung beider Zeiteinheiten auf zwei unabhängige Baugruppen oder Bauteilen auch softwareseitig fehleranfällig.

Dokument D3 = EP-A-0 412 328 wird als nächstliegender Stand der Technik betrachtet.

Hinsichtlich des Gegenstandes des Anspruchs 1 offenbart das D3 ein Verfahren zur Zeitbildung in einer Datenverarbeitungseinheit, bei dem mindestens zwei zueinander redundante Zeiten anhand von mindestens zwei taktgesteuerten digitalen Zählern mit entgegengesetzter Zählrichtung gebildet werden, bei dem einer der Zähler in Vorwärtsrichtung zählt und der andere Zähler in Rückwärtsrichtung zählt, bei den der jeweilige Zähler von einem zugehörigen Taktgenerator mit einer zugehörigen Frequenz getaktet wird, bei dem Momentanwerte der Zähler erfasst und zyklisch ausgelesen werden und in einem Speicher hinterlegt werden, wobei je eine Zählerdifferenz aus dem aktuell erfassten Momentanwert und einem vorangegangenen, hinterlegten Momentanwert des jeweiligen Zählers gebildet wird.

Der Erfindung liegt daher die Aufgabe zugrunde, ein Verfahren zur besonders einfachen, sicheren und möglichst genauen Zeitbildung in einer Datenverarbeitungseinheit anzugeben.

Diese Aufgabe wird erfindungsgemäß gelöst bei einem Verfahren zur Zeitbildung in einer Datenverarbeitungseinheit durch die Merkmale des Anspruchs 1. Hierbei werden zur Zeitbildung in einer Datenverarbeitungseinheit erfindungsgemäß mindestens zwei zueinander redundante Zeiten anhand von mindestens zwei taktgesteuerten digitalen Zählern mit entgegen gesetzter Zählrichtung gebildet.

Die Erfindung geht dabei von der Überlegung aus, dass eine mögliche Zeitungenauigkeit der redundant gebildeten Zeiten weitgehend schnell und sicher identifiziert werden sollte. Hierzu ist in einer besonders einfachen Ausführungsform vorgesehen, zur Bildung von redundanten Zeiten mindestens zwei taktgesteuerte Zähler einzusetzen, welche mit entgegen gesetzter Zählrichtung ausgebildet sind. Durch einen einfachen Vergleich der beiden, jeweils eine Zeit bildenden Zähler können Zeitungenauigkeit schnell und sicher identifiziert werden.

Vorteilhafte Weiterbildungen der Erfindung sind Bestandteil der Unteransprüche.

Zweckmäßigerweise zählt dabei einer der Zähler in Vorwärtsrichtung und der andere Zähler in Rückwärtsrichtung. Je nach Art und Ausbildung der Zähler zählen diese in ganzzahligen Schritten vorwärts bzw. rückwärts. Bei mehr als zwei Zählern zur Bildung mehrerer redundanter Zeiten werden zwei Zähler zu einem Paar verschaltet, von dem ein Zähler vorwärts und der andere rückwärts zählt.

Vorteilhafterweise wird der jeweilige Zähler von einem zugehörigen Taktgenerator mit einer zugehörigen Frequenz getaktet. Hierbei werden die den Zählern zugehörigen Taktgeneratoren, insbesondere die einem Paar von Zählern zugehörigen Taktgeneratoren entsprechend synchronisiert.

Zweckmäßigerweise werden die Frequenzen der Zähler zueinander im Verhältnis einer ganzen oder rationalen Zahl gebildet. Für eine besonders einfache Überwachung der Zeitgenauigkeit wird vorteilhafterweise mittels einer der Zähler die Zeit gebildet und mittels eines weiteren Zählers die gebildete Zeit anhand einer Referenzzeit überwacht. Mit anderen Worten: Einer der Zähler wird als führender oder Master-Zähler (im Weiteren auch Zeit gebender Zähler genannt) zur Bildung der Zeit verwendet. Der andere Zähler (auch Überwachungszähler oder im Weiteren Zeit überwachender Zähler genannt) dient der Überwachung der Zeitbildung. Alternativ oder zusätzlich werden die von den Zählern gebildeten Zeiten auf unzulässige Abweichungen geprüft. Dabei wird die Überprüfung der Zeiten zueinander auf eine vorgegebene Toleranz überschreitende und damit unzulässige Abweichungen mittels des die Überwachung ausführenden Zähler durchgeführt.

Vorzugsweise werden Momentanwerte der Zähler erfasst und zyklisch ausgelesen. Bevorzugt werden die erfassten Momentanwerte der Zähler in einem Speicher hinterlegt. Hierdurch ist eine Dokumentation und somit eine spätere Überprüfung der Zeitbildung zur Qualitätsprüfung ermöglicht.

In der einfachsten Ausführungsform wird zur Überprüfung der Zeitgenauigkeit vorzugsweise die Differenz aus dem aktuell erfassten Momentanwert und einem vorangegangenen, hinterlegten Momentanwert des jeweiligen Zählers gebildet. Diese zählerbezogene Differenz wird im Weiteren als Zählerdifferenz bezeichnet. Für eine mögliche Schwankungsbreiten in der Zeitbildung berücksichtigenden und tolerierenden Überprüfung der Zeitgenauigkeit wird vorteilhafterweise eine aus den Zählerdifferenzen der beiden Zähler resultierende weitere Differenz bestimmt, die ggf. normiert werden kann. Insbesondere wird die Differenz anhand einer dem jeweiligen Zähler zugrunde liegenden Funktion normiert. Alternativ oder zusätzlich wird die aus der Zählerdifferenz des die Zeitüberwachung ausführenden Zählers und der Zählerdifferenz des Zeit gebenden Zählers gebildete Differenz anhand der Zählerdifferenz des Zeit gebenden Zählers normiert. Hierbei ist beispielsweise die Zählerdifferenz eines mit einer höheren Frequenz getakteten Zeit überwachenden Zählers um einen entsprechenden Faktor, z. B. von 32,768 größer als die Zählerdifferenz des Zeit gebenden Zählers. Zum einfachen Vergleich der beiden Zähler zur Überprüfung der Zeitgenauigkeit und/oder auf unzulässige Abweichungen kann die Zählerdifferenz des Zeit überwachenden Zählers bevorzugt durch den betreffenden Faktor dividiert werden.

Des Weiteren wird bevorzugt anhand der Differenz aus den Zählerdifferenzen des Zeit gebenden Zählers und den normierten Zählerdifferenzen des Zeit überwachenden Zählers eine Toleranz ermittelt. Bevorzugt wird dabei anhand der ermittelten Toleranz für die Zähler die absolute Ungenauigkeit des Zeit gebenden Zählers bestimmt. Vorzugsweise wird darüber hinaus anhand einer aus dem Zählwert des Zeit gebenden Zählers ermittelten Toleranz eine Umgebung bestimmt gemäß U = Z1 +/- T (mit U = Umgebung, T = Toleranz, Z1 = erster Zähler). Dabei werden gültige Zählwerte innerhalb der Umgebung berücksichtigt, außerhalb liegende Zählwerte werden als fehlerhaft angesehen und bleiben unberücksichtigt.

Die mit der Erfindung erzielten Vorteile bestehen insbesondere darin, dass zur Bildung von redundanten Zeiten in einer Datenverarbeitungseinheit zwei gemeinsam oder separat taktgesteuerte Zähler vorgesehen sind, welche zueinander mit entgegen gesetzter Zählrichtung ausgebildet sind, wobei einer der beiden Zähler als ein Zeit gebender Zähler und der andere Zähler als Zeit überwachender Zähler geführt werden. Dies ermöglicht in einer besonders einfachen und möglichst sicheren sowie schnellen Analyse der Zählwerte der beiden Zähler durch einfache Differenzbildung eine möglichst gute und hinreichend schnelle Überwachung der Zählwerte beider Zähler auf Zeitungenauigkeit sowohl separat als auch zueinander. Insbesondere bei kurzen Aktualisierungsintervallen ist durch die Berücksichtigung von vorangegangenen Zählwerten der beiden Zähler bei der Differenzbildung eine hinreichend gute und sichere Überwachung der Zähler auf Zeitungenauigkeit und Zeitinkonsistenz ermöglicht. Des Weiteren ist mit einer derartigen Zeitbildung mittels zweier zueinander mit entgegen gesetzter Zählrichtung laufender Zähler, welche Bestandteil einer integrierten Schaltung sind, eine fehlersichere Zeitbildung innerhalb eines integrierten Schaltkreises ermöglicht.

Nachfolgend wird ein Ausführungsbeispiel der Erfindung anhand einer Zeichnung näher erläutert. Hierin zeigen:

FIG 1        schematisch eine Vorrichtung zur Zeitbildung mit zwei taktgesteuerten digitalen Zählern,

FIG 2        eine Tabelle zur Darstellung der anhand der Toleranz gebildeten relativen Ungenauigkeit von durch Zähler gebildeten Zeiten,

FIG 3        ein Diagramm für die Funktion der Toleranz über das Aktualisierungsintervall,

FIG 4 bis 7    verschiedene Diagramme für die Funktion der relativen Ungenauigkeit über das Aktualisierungsintervall mit verschiedenen Zeitbereichen, und

FIG 8        ein Schema für die Verwaltung der Differenzen in einer Speichereinheit.

Gleiche Teile sind in allen Figuren mit denselben Bezugzeichen versehen.

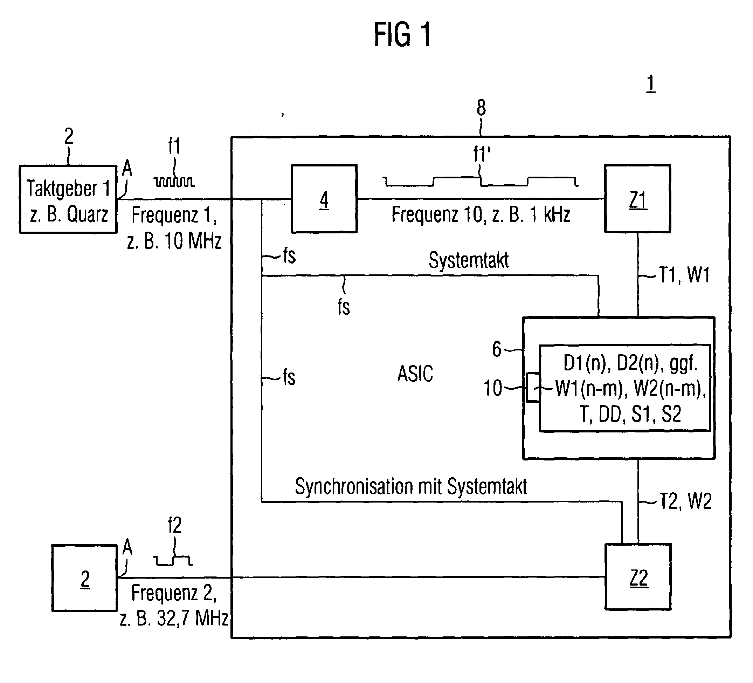

FIG 1 zeigt schematisch eine Vorrichtung 1 zur Zeitbildung redundanter Zeiten T1, T2. Die Vorrichtung 1 kann dabei Bestandteil einer nicht näher dargestellten Datenverarbeitungseinheit, insbesondere einer speicherprogrammierbaren Steuerung für eine technische Anlage und deren zugehörigen, insbesondere sicherheitskritischen Prozess sein. Die Vorrichtung 1 zur Zeitbildung umfasst mindestens zwei taktgesteuerte Zähler Z1, Z2 zur Bildung von zueinander redundanten Zeiten T1 bzw. T2.

Zur Bildung der redundanten Zeiten T1 und T2 sind die taktgesteuerten Zählern Z1 bzw. Z2 mit zueinander entgegen gesetzter Zählrichtung ausgebildet. Das heißt, einer der Zähler Z1 ist als Vorwärtszähler und der andere Zähler Z2 ist als Rückwärtszähler ausgebildet. Je nach Art und Ausbildung der Vorrichtung 1 kann diese in nicht näher dargestellter Art und Weise auch mehr als zwei Zähler Z1 und Z2 zur Bildung mehrerer redundanter Zeiten T1, T2 umfassen. Dabei bilden immer zwei Zähler Z1 und Z2 mit zueinander entgegen gesetzter Zählrichtung ein Zähler-Paar.

Dem jeweiligen Zähler Z1 und Z2 ist ein zugehöriger Taktgenerator 2 mit einer zugehörigen Frequenz f1 bzw. f2 vorgeschaltet. Der jeweilige Taktgenerator 2 ist beispielsweise als ein Quarzgenerator ausgebildet. Zur Taktsteuerung der beiden Zähler Z1 und Z2 ist ggf. ein Frequenzteiler 4 vorgesehen, welcher die vom betreffenden Taktgenerator 2 erzeugte Frequenz f1 z. B. mit 10 MHz nochmals teilt in eine geteilte Frequenz f1' von 1 kHz bei einer Frequenzteilung mit einem Faktor von 10.000.

Zur Verarbeitung der von den beiden Zählern Z1 und Z2 gebildeten redundanten Zeiten T1 bzw. T2 werden diese einer Prozessoreinheit 6 der Datenverarbeitungseinheit zugeführt. Mittels der Prozessoreinheit 6, insbesondere mittels eines von dieser erzeugten Systemtakts fs werden beide Zähler Z1 und Z2 synchronisiert.

Je nach Art und Ausbildung der Vorrichtung 1 können deren Komponenten - Zähler Z1, Z2, Frequenzteiler 4, Prozessoreinheit 6 - Bestandteil einer integrierten Schaltung 8 sein, die eingangsseitig von Ausgängen A der im allgemeinen als Analog-Bauelemente ausgebildeten Taktgeneratoren 2, z. B. Quarz-Generatoren, belegt ist.

Der Betrieb der Vorrichtung 1 zur Bildung von redundanten Zeiten T1 und T2 wird nachfolgend näher beschrieben.

Die beiden Zähler Z1 und Z2 sind taktgesteuerte Zähler, z. B. 32-Bit-Zähler mit zueinander entgegen gesetzter Zählrichtung, wobei einer der Zähler Z1 ein Vorwärtszähler und der andere Zähler Z2 ein Rückwärtszähler ist. Wie bereits oben dargelegt, sind beide Zähler Z1 und Z2 zueinander im Verhältnis einer rationalen Zahl, z. B. durch einen Bruch von n/m (mit n, m = ganze Zahlen), wobei n wesentlich größer als m ist, ausgebildet. Insbesondere wird dabei einer der Zähler Z1 als Zeit gebender und führender Zähler (im Weiteren kurz Zeit gebender Zähler Z1 genannt) ausgeführt, wobei der andere Zähler Z2 als Zeit überwachender Zähler (im Weiteren kurz Zeit überwachender Zähler Z2 genannt) ausgebildet ist. Das heißt, der Zeit gebende Zähler Z1 dient der Bildung der zugehörigen Anwenderzeit, d. h. der Zeit T1. Der Zeit überwachende Zähler Z2 dient ebenfalls der Bildung einer zugehörigen Anwenderzeit, d. h. der Zeit T2, und zudem der Überwachung des Zeit gebenden Zählers Z1. Hierdurch ist sichergestellt, dass beide durch die Zähler Z1 und Z2 separat gebildeten Zeiten T1 bzw. T2 besonders einfach und schnell auf Ungenauigkeit und Konsistenz geprüft werden können.

Beispielsweise ist der Zeit gebende Zähler Z1 mit einer führenden Frequenz f1 von 1 kHz versehen. Der Zeit überwachende Zähler Z2 ist mit einem Vielfachen der führenden Frequenz f2 versehen, wobei die dem Zeit überwachenden Zähler Z2 - einem 32-Bit-Zähler - zugehörige Frequenz f2 ermittelt wird gemäß:

$$f2 = 32 \times (1024/1000) \times f1 \qquad\qquad [1]$$

mit f2 = Frequenz des Zeit überwachenden Zählers Z2,
f1 = Frequenz des Zeit gebenden Zählers Z1.

Beispielsweise ergibt sich bei einer Frequenz f1 von 1 kHz des Zeit gebenden Zählers Z1 für den Zeit überwachenden Zähler Z2 eine Frequenz f2 von ungefähr 32,768 kHz. Das nachfolgende Verfahren wird anhand der hier beispielhaft ermittelten Frequenzen f1 und f2 der beiden Zähler Z1 bzw. Z2 näher beschrieben.

Die Überwachung des führenden und somit Zeit gebenden Zählers Z1 erfolgt dabei anhand eines zyklisch gesteuerten Auslesens von momentanen Zählwerten W1(n) und W2(n) beider Zähler Z1 bzw. Z2. Anschließend wird anhand der ermittelten momentanen Zählwerte W1(n) und W2(n) und vorangegangener Zählwerte W1(n-m) und W2(n-m) der betreffenden Zähler Z1 bzw. Z2 betreffende zählerbezogene Differenzen D1 bzw. D2 gebildet. Diese zählerbezogenen Differenzen D1 und D2 werden im Weiteren als Zählerdifferenzen D1 und D2 bezeichnet. Ein erster Überwachungsschritt prüft in der einfachsten Form anhand einer negativen Zählerdifferenz D1 oder D2, ob der rückwärts zählende Zähler Z1 bzw. Z2 zeitlich abnehmende Zählwerte W1(n), W1(n-m) bzw. W2(n), W2(n-m) aufweist.

Für eine Überwachung des Zeit gebenden Zählers Z1 wird anhand des "schnelleren", eine höhere Taktfrequenz aufweisenden und Zeit überwachenden Zählers Z2 und dessen zugehörigen Zählerdifferenz D2 geprüft, ob diese um den im oben genannten Beispiel beschriebenen Faktor von 32,768 größer ist als die Zählerdifferenz D1 des Zeit gebenden Zählers Z1. Ein unmittelbarer Vergleich ist ermöglicht, indem die Zählerdifferenz D2 des schnelleren und Zeit überwachenden Zählers Z2 durch den Faktor 32,768 dividiert wird.

Darüber hinaus wird zur qualifizierten Überwachung des Zeit gebenden Zählers Z1 eine Toleranz T ermittelt. Die Toleranz T stellt dabei eine Funktion aus der Basiszeit des führenden und Zeit gebenden Zählers Z1 (z. B. mit einer Basiszeit von 1 ms oder einer Taktfrequenz von 1 kHz), der Summe der Driften der beiden Taktgeneratoren 2 der betreffenden Zähler Z1 und Z2 und der maximalen Schwankungsbreite der ermittelten Zählerdifferenzen D1, D2 (auch Zugriffszeitpunkt-Differenz oder Jitter genannt) dar. Die Toleranz T verhält sich daher als normierte Toleranz zu den zuvor ermittelten Zählerdifferenzen D1 und D2 wie folgt:

$$\left| \, \left| D1(Z1) \right| - \left| D2(Z2) \right| \, \right| \leq T \qquad [2]$$

mit D1 = Zählerdifferenz des momentanen Zählwertes W1(n) zum vorangegangenen Zählwert W1(n-m) des Zeit gebenden Zählers Z1, D2 = Zählerdifferenz des momentanen Zählwertes W2(n) zum vorangegangenen Zählwert W2(n-m) des Zeit überwachenden Zählers Z2, T = Toleranz.

Mit anderen Worten: Bei der Bildung der Toleranz T wird anhand der Zählerdifferenzen D1 und D2 der beiden Zähler Z1 bzw. Z2 eine weitere Differenz DD zur Ermittlung der absoluten Ungenauigkeit bestimmt, die ggf. normiert werden kann.

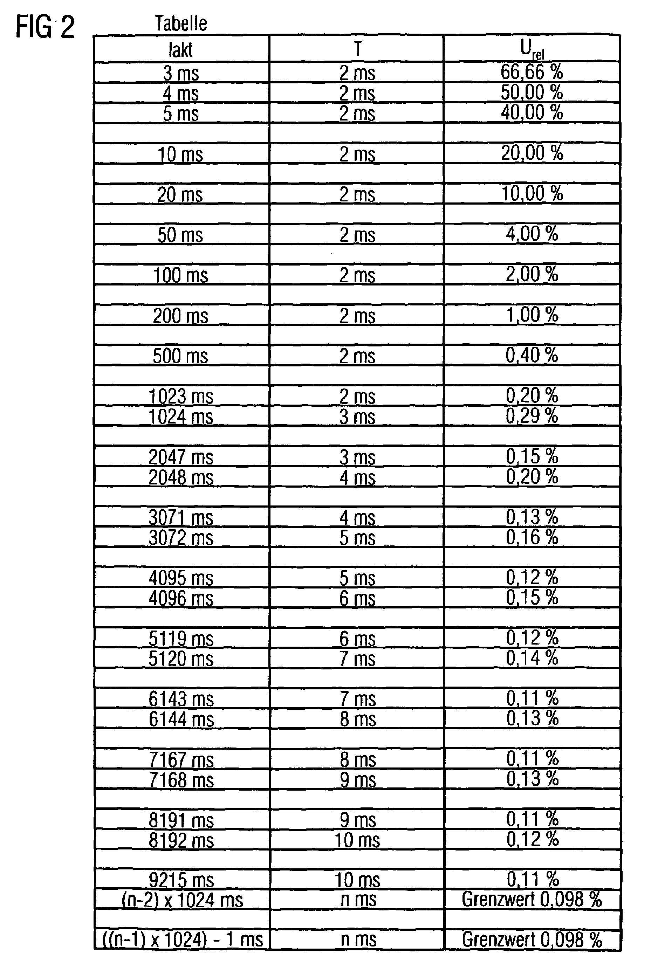

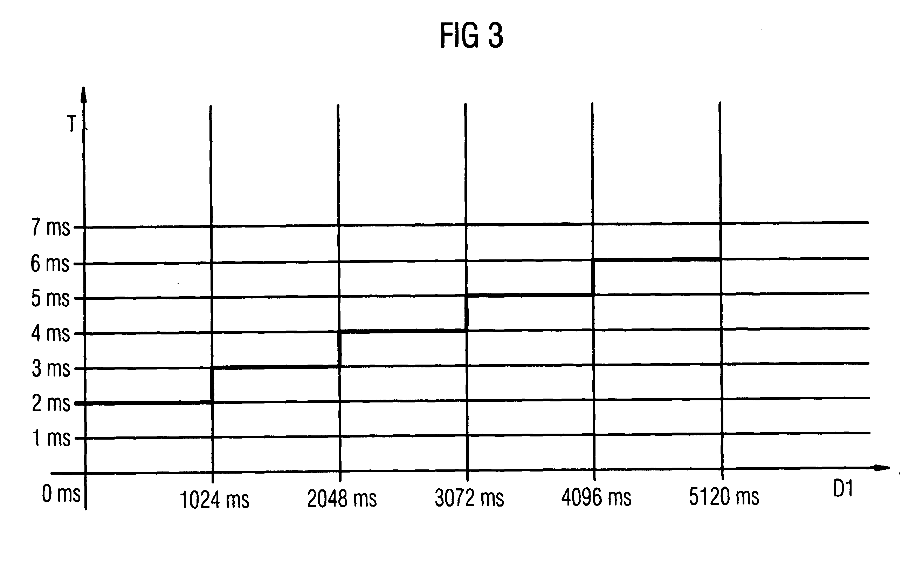

FIG 3 zeigt den Verlauf der Toleranz T in Abhängigkeit von der Zählerdifferenz D1 des führenden Zählers Z1 analog zu den Werten der Tabelle in FIG 2.

Ein Beispiel für die in Abhängigkeit von der Funktion und der Gleichung [2] gebildeten Toleranz T für verschiedene Zählerdifferenzen D1 des führenden Zählers T1 wird anhand der in FIG 2 dargestellten Tabelle und der in FIG 3 dargestellten Funktion näher erläutert.

Die Toleranz T wird zählerbezogen für den Zeit gebenden Zähler Z1, wie oben beschrieben, wie folgt ermittelt:

$$T = 2ms + \frac{D1(Z1)}{1024} \qquad [3]$$

mit T = Toleranz, D1 = Zählerdifferenz der Zählwerte W1(n), W1(n-m) des Zeit gebenden Zählers Z1.

Dabei beträgt die anhand der Gleichung [3] ermittelte Toleranz T einen Wert von 2 ms für kleine Zykluszeiten, wobei der Wert 2 ms bis zu einer Zykluszeit von 1023 ms beibehalten wird.

Eine den Zeit gebenden Zähler Z1 repräsentierende relative Ungenauigkeit Urel wird dabei wie folgt ermittelt:

$$Urel(Z1) = T / Iakt \qquad [4]$$

mit Urel(Z1) = relative Ungenauigkeit des Zählers Z1,
T = Toleranz, Iakt = Aktualisierungsintervall.

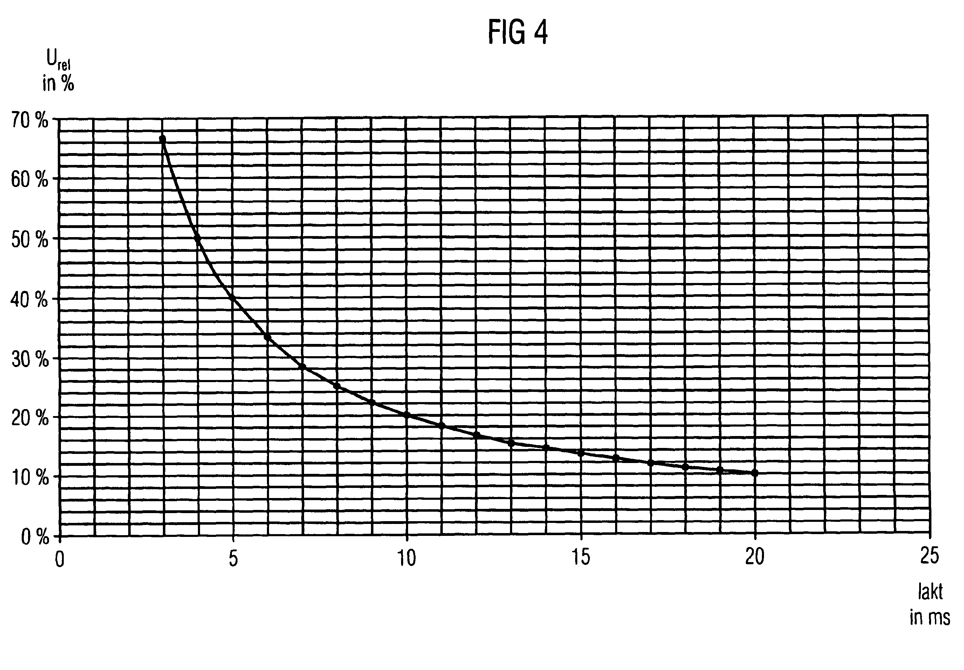

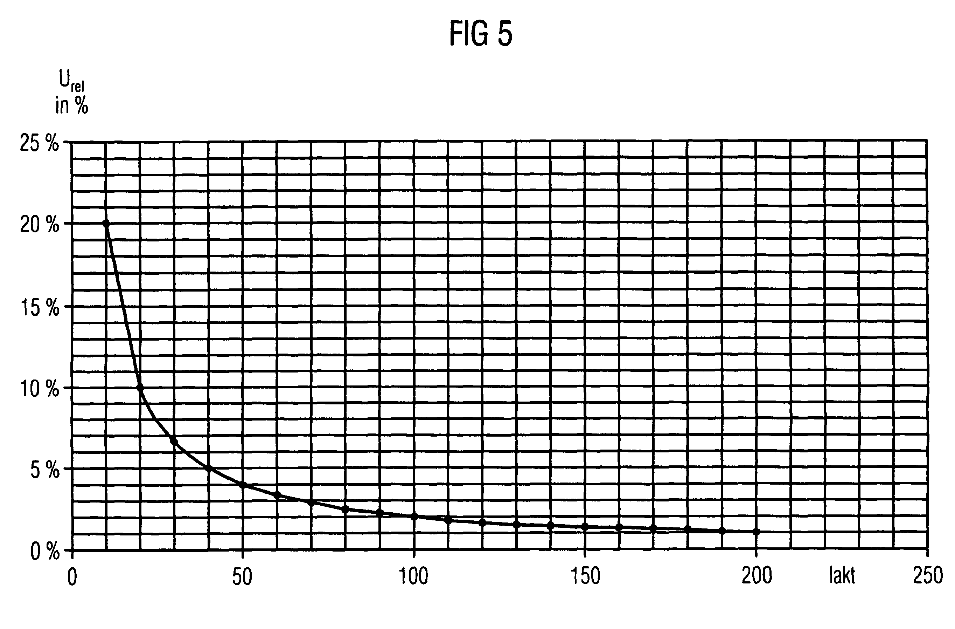

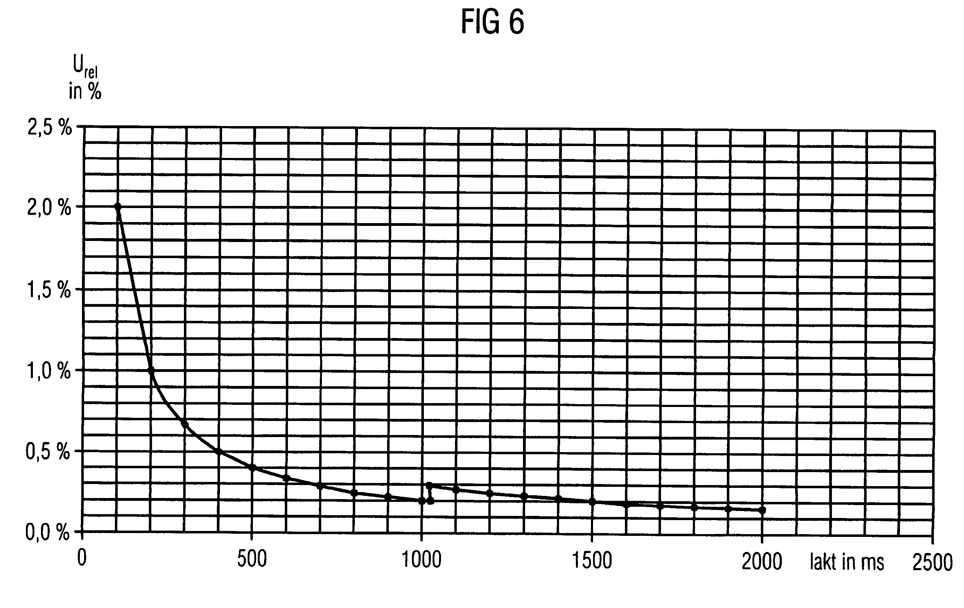

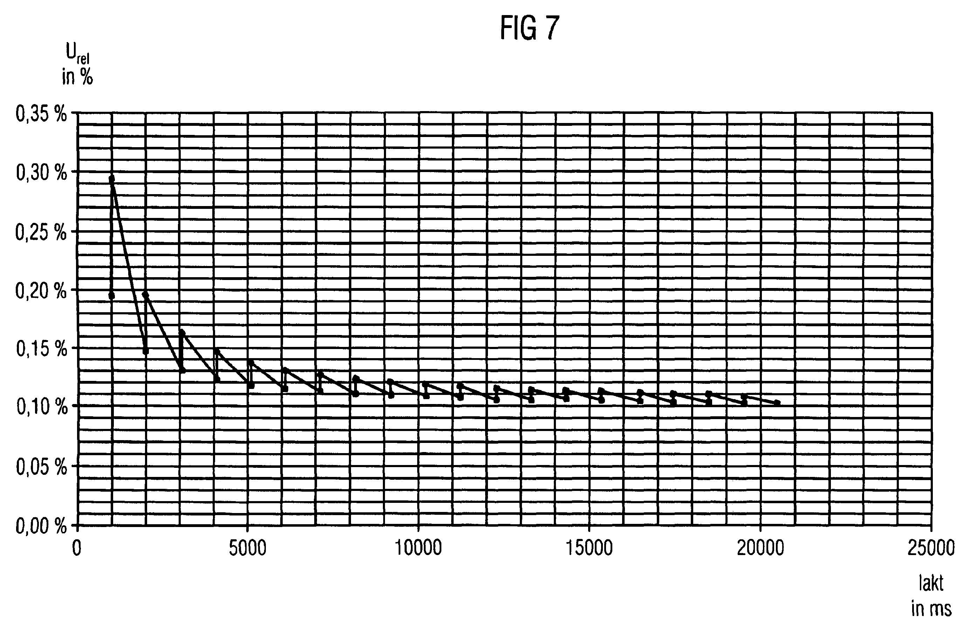

1. Die relative Ungenauigkeit Urel des Zählers Z1 beträgt 66,66 % bei einer ermittelten Prozesstoleranz oder Toleranz T von 2 ms und einem vorgegebenen Aktualisierungsintervall Iakt von 3 ms; mit größer werdendem Aktualisierungsintervall Iakt von 7167 ms bei einer Toleranz T von 8 ms beträgt die relative Ungenauigkeit Urel des Zählers Z1 nur noch 0,11 %. In den Figuren 4 bis 7 ist die relative Ungenauigkeit Urel als Funktion über das Aktualisierungsintervall Iakt für verschiedene Zeitintervalle von 3 ms bis 20 ms, von 10 ms bis 200 ms, von 100 ms bis 2000 ms bzw. von 1000 ms bis 20 000 ms dargestellt. Darüber hinaus kann anhand einer aus dem Zählwert W1(n) des Zeit gebenden Zählers Z1 ermittelten Toleranz T eine Umgebung U gemäß U = Z1 +/- T bestimmt werden. Dabei liegen gültige Zählwerte W1(n) innerhalb der Umgebung U und außerhalb liegende Zählwerte W1(n) sind fehlerhaft und werden nicht berücksichtigt.

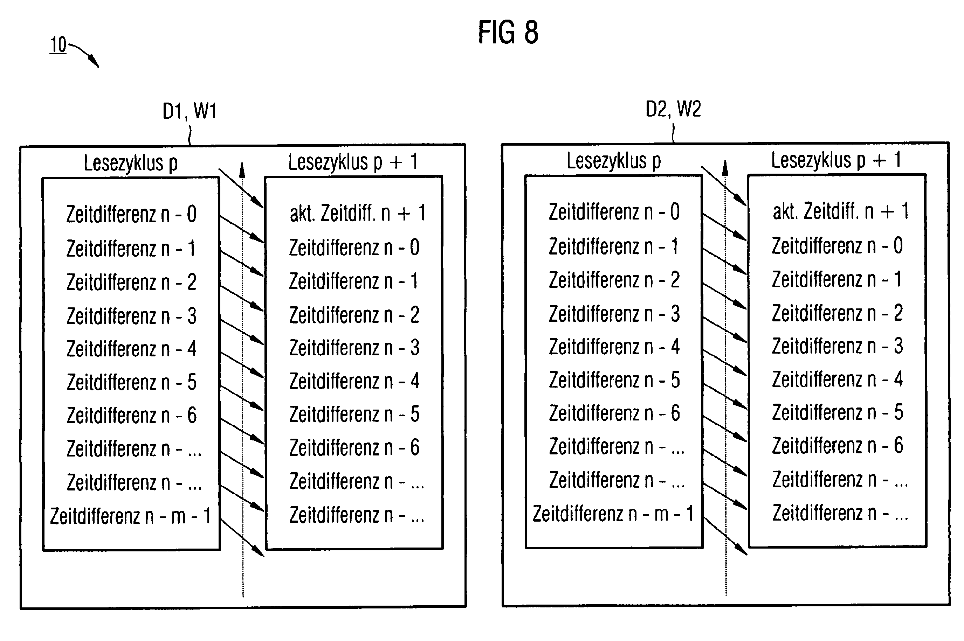

Mit anderen Worten: Bei kleinen Aktualisierungsintervallen Iakt, z. B. aufgrund von kurzen Zyklen des betreffenden Anwenderprogramms von z. B. 3 ms, ist die relative Ungenauigkeit Urel nicht akzeptabel. Um auch für diesen Bereich einen hinreichend guten Wert für die relative Ungenauigkeit Urel zu erreichen, wird in einer bevorzugten Ausführungsform des Verfahrens zur Zeitbildung auf vorangegangene Zeit- oder Zählwerte W1(n-m) und W2(n-m) zurückgegriffen, wie dies beispielhaft in FIG 8 dargestellt ist.

Dazu werden gemäß FIG 1 die momentan erfassten Zählwerte W1(n) und W2(n) der beiden Zähler Z1 bzw. Z2 mittels der Prozessoreinheit 6 in einer zugehörigen Speichereinheit 10 hinterlegt. Je nach Vorgabe können dabei eine Anzahl m, beispielsweise mit m = 5, 10 oder 20, von vorangegangenen Zählwerte W1(n-m) und W2(n-m) des betreffenden Zählers Z1 bzw. Z2 berücksichtigt werden. Die Anzahl m von vorangegangenen Zählwerten W1(n-m) oder W2(n-m) wird bevorzugt als ein Satz S1 bzw. S2 verarbeitet, wobei anhand des jeweils zugehörigen aktuellen Zählwertes W1(n) oder W2(n) und des betreffenden Satzes S1 oder S2 die Zählerdifferenzen D1(n) bzw. D2(n) für den Zeit gebenden Zähler Z1 bzw. den Zeit überwachenden Zähler Z2 gebildet werden.

Je nach Art und Ausbildung der Vorrichtung 1 werden die betreffenden Zählerdifferenzen D1(n), D1(n-m) und/oder D2(n), D2(n-m) in der Speichereinheit 10 hinterlegt. Mit dem nächsten Zugriffszeitpunkt oder mit dem nächsten Aktualisierungsintervall Iakt werden anhand des jeweils erfassten momentanen Zählwerts W1(n) und/oder W2(n) die zugehörigen nächsten momentanen Zählerdifferenzen D1(n) bzw. D2(n) ermittelt. Nach dem so genannten "First-in-Last-out"-Prinzip wird vor Hinterlegung der aktuellen Zählerdifferenzen D1(n) und/oder D2(n) und der aktuellen Zählwerte Z1(n) und/oder Z2(n) der gesamte Satz S1 bzw. S2 der vorangegangenen Zählwerte W1(n-m) bzw. W2(n-m) und/oder der vorangegangenen Zählerdifferenzen D1(n-m) bzw. D2(n-m) um einen Speicherplatz oder um eine Stelle verschoben. Alternativ kann anstelle der Verschiebung in der Speichereinheit 10 eine Indexänderung oder eine Zeigerstellung verändert werden.

Im Detail wird das Prinzip der Verschiebung oder Indexierung anhand eines Beispiels näher erläutert. Die in FIG 8 dargestellten anhand von vorangegangenen Zählwerten W1(n-m) und W2(n-m) ermittelten vorangegangenen Zählerdifferenzen D1(n-1) und D2(n-1) mit dem Index n-1 werden für den nächsten Lesegang oder -zyklus p+1 verschoben in betreffende Zellen mit dem gleichen Index n-1. Die älteren vorangegangenen Zählerdifferenzen D1(n-2) und D2(n-2) mit dem Index n-2 werden verschoben in die betreffenden Zellen mit dem Index n-2 usw.

Die zwei bisher aktuellen Zählerdifferenzen D1(n) und D2(n) mit dem Index n-0 werden in die betreffenden Zellen mit dem Index n-0 des nächsten Auslesezyklus p+1 verschoben. Ferner werden die zwei soeben anhand von momentanen Zählwerten W1(n) und W2(n) und vorangegangenen Zählwerten W1(n-m) bzw. W2(n-m) ermittelten aktuellen Zählerdifferenzen D1(n) und D2(n) als neue aktuelle Zählerdifferenzen D1(n) bzw. D2(n) in die Zellen mit dem Index n+1 geschrieben und bilden von nun an bis zum nächsten Aktualisierungsintervall Iakt die derzeit aktuellen oder momentanen Zählerdifferenzen D1(n) und D2(n).

Im Anschluss an die beschriebene Verschiebung des Satzes S1 und S2 der vorangegangenen Zählerdifferenzen D1(n-m) bzw. D2(n-m) und der Hinterlegung der aktuellen Zählerdifferenzen D1(n) bzw. D2(n) in den Zellen mit dem Index n+1 werden die beiden Zähler Z1 und Z2 anhand der Prozessoreinheit 6 auf unzulässige Abweichungen unter anderem mittels der Toleranz T anhand der Bildung einer weiteren Differenz DD aus den zugehörigen aktuellen Zählerdifferenzen D1(n) und D2(n) der Zähler Z1 bzw. Z2 zur Bestimmung der absoluten Ungenauigkeit geprüft.

Je nach Art und Ausbildung des Verfahrens, insbesondere für eine akzeptable Fehleraufdeckungszeit werden die Zählerdifferenzen D1(n) und D2(n) und die aus diesen gebildete Differenz DD nicht nur anhand von unmittelbar aufeinander folgenden Zugriffen oder Zählwerten W1(n), W1(n-m) bzw. W2(n), W2(n-m) oder Zählerdifferenzen D1(n), D1(n-m) bzw. D2(n), D2(n-m) gebildet, sondern vielmehr können diese auch anhand von einem für den Satz S1 und/oder den Satz S2 gebildeten Durchschnittswert und dem aktuellen Zählwert W1(n) und W2(n) bzw. der aktuellen Zählerdifferenz D1(n) und D2(n) gebildet werden. Eine weitere alternative Differenzbildung für die Zählerdifferenzen D1(n) und D2(n) ist beispielsweise aus den beiden ältesten Zählwerten W1(n-m) und W2(n-m) und den aktuellen Zählwerten W1(n) bzw. W2(n) möglich. Diese Ausführungen stehen stellvertretend auch für Zeiger- oder Indextechniken.

Zur Ausführung der beschriebenen Überwachungsfunktion zur Bestimmung der absoluten Ungenauigkeit anhand der Differenz DD aus den Zählerdifferenzen D1 und D2 der Zähler Z1 und Z2 und zur Einstellung einer akzeptablen Fehleraufdeckungszeit kann diese wie folgt eingestellt und anhand folgender Bedingung vorgegeben werden:

Fehleraufdeckungszeit <= Prozess-Fehlertoleranzzeit.

Beispielsweise beträgt die Prozess-Fehlertoleranzzeit 50 ms, wobei die Fehleraufdeckungszeit im schlechtesten Fall die Zeitspanne zwischen dem ältesten und dem aktuellen Wertepaar der Zählwerte W1(n-m) und W1(n) für den Zähler Z1 oder W2(n-m) und W2(n) für den Zähler Z2 ist.

Das heißt, grobe Fehler oder Ungenauigkeiten werden kürzest möglich bei einer Differenzbildung mit einer Zählerdifferenz D1(n) und D2(n) aus dem Werte-Paar der Zählwerte W1(n-m) bzw. W2(n-m) des aktuellen Zählwertes W1(n) bzw. W2(n) mit Index n+1 und des unmittelbar vorangegangenen Zählwertes W1(n-1) bzw. W2(n-1) mit Index n-0 ermittelt. Mit größer werdendem Abstand des aktuellen Zählwertes W1(n) und W2(n) vom vorangegangenen Zählwert W1(n-m) bzw. W2(n-m) verlängert sich die Fehleraufdeckungszeit unter anderem bei kleinen Fehlern.

Der Vorteil des hier beschriebenen Verfahrens beruht insbesondere darauf, dass die Zeitbildung und die Zeitüberwachung unabhängig von der zugrunde liegenden Hardware und/oder Software ausgeführt wird. Beispielsweise kann diese Unabhängigkeit von Hardware und/oder Software durch so genanntes "Coded Processing" realisiert werden.

Im "Coded Processing" werden dabei auf einer Hardware-Komponente zwei diversitäre Implementierungen eines Programms oder einer Programmsequenz abgearbeitet. Hierdurch können aufgrund der Diversität Verfälschungen mit gleicher Ursache ausgeschlossen werden, so dass eine ausreichende Sicherheit gewährleistet ist. Die Generierung einer diversitären Implementierung zu einer existierenden Hardware beruht dabei auf einer speziellen Codierung. Hierzu wird unter anderem auf die nicht veröffentlichte Patentanmeldung DE 102 19 501 verwiesen.

**Patentansprüche**

1. Verfahren zur Zeitbildung in einer Datenverarbeitungseinheit, bei dem mindestens zwei zueinander redundante Zeiten (T1, T2) anhand von zwei taktgesteuerten digitalen Zählern (Z1, Z2) mit entgegengesetzter Zählrichtung gebildet werden, bei dem einer der Zähler (Z1) in Vorwärtsrichtung zählt und der andere Zähler (Z2) in Rückwärtsrichtung zählt, bei dem der jeweilige Zähler (Z1, Z2) von einem zugehörigen Taktgenerator (2) mit einer zugehörigen Frequenz (f1, f2) getaktet wird, bei dem Momentanwerte der Zähler (Z1, Z2) erfasst und zyklisch ausgelesen und in einem Speicher (10) hinterlegt werden, wobei je eine Zählerdifferenz (D1(n), D2(n)) aus dem aktuell erfassten Momentanwert und einem vorangegangenen, hinterlegten Momentanwert des jeweiligen Zählers (Z1, Z2) gebildet wird, **dadurch gekennzeichnet, dass** eine aus den Zählerdifferenzen (D1(n), D2(n)) der beiden Zähler (Z1, Z2) resultierende weitere Differenz (DD) bestimmt, und anhand der gebildeten Differenz (DD) eine Toleranz (T) ermittelt wird wodurch die gebildeten Zeiten der Zähler (Z1, Z2) überwachbar werden.

2. Verfahren nach Anspruch 1, bei dem die Frequenzen (f1, f2) der Zähler (Z1, Z2) zueinander im Verhältnis einer ganzen oder rationalen Zahl gebildet werden.

3. Verfahren nach einem der Ansprüche 1 oder 2, bei dem die von den Zählern (Z1, Z2) gebildeten Zeiten auf unzulässige Abweichungen geprüft werden.

4. Verfahren nach einem der Ansprüche 1 bis 34, wobei anhand einer dem jeweiligen Zähler (Z1, Z2) zugrundeliegenden Funktion die Differenz nominiert wird.

5. Verfahren nach einem der Ansprüche 1 bis 4, bei dem anhand der ermittelten Toleranz (T) eine Umgebung (U) gemäß Wert des Zählers +/- Wert der Toleranz bestimmt wird, wobei gültige Zählwerte (W1(n)) innerhalb der Umgebung (U) berücksichtigt und außerhalb liegende Zählwerte (W1(n)) fehlerhaft sind und nicht berücksichtigt werden.

**Claims**

1. Method for time generation in a data processing unit, in which at least two times (T1, T2) which are redundant in relation to one another are generated using two clock-controlled digital counters (Z1, Z2) with opposite counting directions, in which one of the counters (Z1) counts upwards and the other counter (Z2) counts downwards, in which the respective counter (Z1, Z2) is clocked by an associated clock generator (2) at an associated frequency (f1, f2), in which instantaneous values of the counters (Z1, Z2) are captured and cyclically read and stored in a memory (10), wherein a respective counter difference (D1 (n), D2 (n)) is formed from the currently captured instantaneous value and a preceding, stored instantaneous value of the respective counter (Z1, Z2), **characterized in that** a further difference (DD) resulting from the counter differences (D1 (n), D2 (n)) for the two counters (Z1, Z2) is determined and the formed difference (DD) is used to ascertain a tolerance (T) which allows the generated times from the counters (Z1, Z2) to be monitored.

2. Method according to Claim 1, in which the frequencies (f1, f2) of the counters (Z1, Z2) are formed in the ratio of an integer or rational number in relation to one another.

3. Method according to one of Claims 1 and 2, in which the times generated by the counters (Z1, Z2) are checked for inadmissible discrepancies.

4. Method according to one of Claims 1 to 34, wherein a function on which the respective counter (Z1, Z2) is based is used to nominate the difference.

5. Method according to one of Claims 1 to 4, in which the ascertained tolerance (T) is used to determine a vicinity (U) according to the value of the counter +/- value of the tolerance, wherein valid counter values (W1 (n)) within the vicinity (U) are considered and counter values (W1 (n)) outside are erroneous and not considered.

**Revendications**

1. Procédé de génération de temps dans une unité de traitement de données, dans lequel on forme au moins deux temps ( T1, T2 ) redondants l'un par rapport à l'autre au moyen de deux compteurs ( Z1, Z2 ) numériques de sens de comptage opposés et commandés par horloge, dans lequel l'un des compteurs ( Z1 ) compte dans le sens progressif et l'autre compteur ( Z2 ) compte dans le sens dégressif, dans lequel on cadence le compteur ( Z1, Z2 ) respectif par un générateur ( 2 ) d'horloge associé ayant une fréquence ( f1, f2 ) associée, dans lequel on détecte des valeurs instantanées des compteurs ( Z1, Z2 ) et on les lit cycliquement et on les mémorise dans une mémoire ( 10 ) en formant respectivement une différence ( D1 ( n ), D2 ( n ) ) entre la valeur instantanée détectée présentement et une valeur instantanée précédente mémorisée du compteur ( Z1, Z2 ) respectif, **caractérisé en ce qu'**on détermine à partir des différences ( D1( n ), D2( n ) ) des deux compteurs ( Z1, Z2 ) une autre différence ( DD ) résultante et au moyen de la différence ( DD ) formée, on détermine une tolérance ( T ) grâce à quoi on peut contrôler les temps générés des compteurs ( Z1, Z2 ).

2. Procédé suivant la revendication 1, dans lequel on forme les fréquences ( f1, f2 ) des compteurs ( Z1, Z2 ) l'une par rapport à l'autre suivant une relation d'un nombre entier ou relationnel.

3. Procédé suivant l'une des revendications 1 ou 2, dans lequel on contrôle des écarts inadmissibles des temps générés par les compteurs ( Z1, Z2 ).

4. Procédé suivant l'une des revendications 1 à 3, dans lequel on inscrit la différence au moyen d'une fonction à la base du compteur ( Z1, Z2 ) respectif.

5. Procédé suivant l'une des revendications 1 à 4, dans lequel on détermine au moyen de la tolérance ( T ) déterminée une approximation ( U ) suivant la valeur +/- de compteur de la tolérance, des valeurs ( W1( ( n ) ) ) de compteur valables à l'intérieur de l'approximation ( U ) étant prises en compte et des valeurs ( W1 ( n ) ) de compteur se trouvant à l'extérieur étant défectueuses et n'étant pas prises en compte.

# FIG 1

EP 1 491 985 B1

**2** — Taktgeber 1 z. B. Quarz

A

f1

Frequenz 1, z. B. 10 MHz

**4**

f1'

Frequenz 10, z. B. 1 kHz

**Z1**

fs — Systemtakt

fs

T1, W1

**6** — D1(n), D2(n), ggf. W1(n-m), W2(n-m), T, DD, S1, S2

**10**

fs

ASIC

Synchronisation mit Systemtakt

T2, W2

**2**

A

f2

Frequenz 2, z. B. 32,7 MHz

**Z2**

1

8

FIG 2

Tabelle

| Iakt | T | $U_{rel}$ |
|---|---|---|
| 3 ms | 2 ms | 66,66 % |
| 4 ms | 2 ms | 50,00 % |
| 5 ms | 2 ms | 40,00 % |
| 10 ms | 2 ms | 20,00 % |
| 20 ms | 2 ms | 10,00 % |
| 50 ms | 2 ms | 4,00 % |
| 100 ms | 2 ms | 2,00 % |
| 200 ms | 2 ms | 1,00 % |
| 500 ms | 2 ms | 0,40 % |
| 1023 ms | 2 ms | 0,20 % |
| 1024 ms | 3 ms | 0,29 % |
| 2047 ms | 3 ms | 0,15 % |
| 2048 ms | 4 ms | 0,20 % |
| 3071 ms | 4 ms | 0,13 % |
| 3072 ms | 5 ms | 0,16 % |
| 4095 ms | 5 ms | 0,12 % |
| 4096 ms | 6 ms | 0,15 % |
| 5119 ms | 6 ms | 0,12 % |
| 5120 ms | 7 ms | 0,14 % |
| 6143 ms | 7 ms | 0,11 % |
| 6144 ms | 8 ms | 0,13 % |
| 7167 ms | 8 ms | 0,11 % |
| 7168 ms | 9 ms | 0,13 % |
| 8191 ms | 9 ms | 0,11 % |
| 8192 ms | 10 ms | 0,12 % |
| 9215 ms | 10 ms | 0,11 % |
| (n-2) x 1024 ms | n ms | Grenzwert 0,098 % |
| ((n-1) x 1024) - 1 ms | n ms | Grenzwert 0,098 % |

**FIG 3**

EP 1 491 985 B1

# FIG 4

# FIG 5

## FIG 6

EP 1 491 985 B1

FIG 7

EP 1 491 985 B1

# FIG 8

EP 1 491 985 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0412328 A
- DE 10219501